Europäisches Patentamt

European Patent Office

Office européen des brevets

(11) Veröffentlichungsnummer: **0 019 708**
**B1**

(12) **EUROPÄISCHE PATENTSCHRIFT**

(45) Veröffentlichungstag der Patentschrift:
**01.12.82**

(21) Anmeldenummer: **80101927.4**

(22) Anmeldetag: **10.04.80**

(51) Int. Cl.³: **B 21 D 51/10,** B 41 F 13/58,
B 65 H 45/22

(54) Verfahren zum Herstellen eines Trichterbleches für einen Falztrichter einer Rotationsdruckmaschine und danach hergestelltes Trichterblech.

(30) Priorität: **29.05.79 DE 2921757**

(43) Veröffentlichungstag der Anmeldung:
**10.12.80 Patentblatt 80/25**

(45) Bekanntmachung des Hinweises auf die Patenterteilung:
**01.12.82 Patentblatt 82/48**

(84) Benannte Vertragsstaaten:
**CH DE FR GB LI SE**

(56) Entgegenhaltungen:
**DE-B-2 240 397**
**US-H-952 006**

(73) Patentinhaber: **M.A.N.-ROLAND Druckmaschinen Aktiengesellschaft, Christian-Pless-Strasse 6-30, D-6050 Offenbach/Main (DE)**

(72) Erfinder: **Hajek, Josef, Bürgermeister-Ebner-Strasse 10, D-8904 Friedberg-Stätzling (DE)**
Erfinder: **Rotter, Siegfried, Neuschwansteinstrasse 14a, D-8900 Augsburg (DE)**
Erfinder: **Schwöpfinger, Hans, Dr.-Otto-Meyer-Strasse 18, D-8900 Augsburg (DE)**
Erfinder: **Schwarz, Josef, Schillstrasse 81, D-8900 Augsburg (DE)**

**Verfahren zum Herstellen eines Trichterbleches für einen Falztrichter einer Rotationsdruckmaschine und danach hergestelltes Trichterblech**

Die Erfindung bezieht sich auf ein Verfahren zum Herstellen eines Trichterbleches für einen Falztrichter einer Rotationsdruckmaschine, dessen Längskanten Druckluftzuführungskammern mit Austrittsöffnungen aufweisen und auf ein danach hergestelltes Trichterblech.

Derartige Falztrichter sind aus der DE-AS 2 240 397 bekannt. Werden die Längskanten durch Rohre konstanten Durchmessers gebildet, so ist zwar der fertigungstechnische Aufwand gering. Aus Gründen einer einwandfreien Führung der Papierbahnen über dem Falztrichter ist es jedoch erwünscht, dass der Krümmungsradius der Längskanten zur Trichterspitze hin laufend abnimmt. Die Herstellung hierfür verwendbarer konischer Rohre ist aber fertigungstechnisch sehr aufwendig.

Der Erfindung liegt die Aufgabe zugrunde, ein Herstellungsverfahren für ein Trichterblech der eingangs genannten Gattung sowie ein derartiges Trichterblech zu schaffen, das bei geringem Fertigungsaufwand mit konisch zulaufenden Längskanten ausgeführt werden kann.

Erfindungsgemäss wird dies durch die Massnahmen der Ansprüche 1 und 5 erreicht.

Weitere Merkmale und Vorteile der Erfindung ergeben sich aus den Unteransprüchen in Verbindung mit der nachfolgenden Beschreibung eines Ausführungsbeispieles anhand der Zeichnung. Auf dieser zeigt

Fig. 1 ein Trichterblech vor der Verformung der Randkontur in einer Rückansicht,

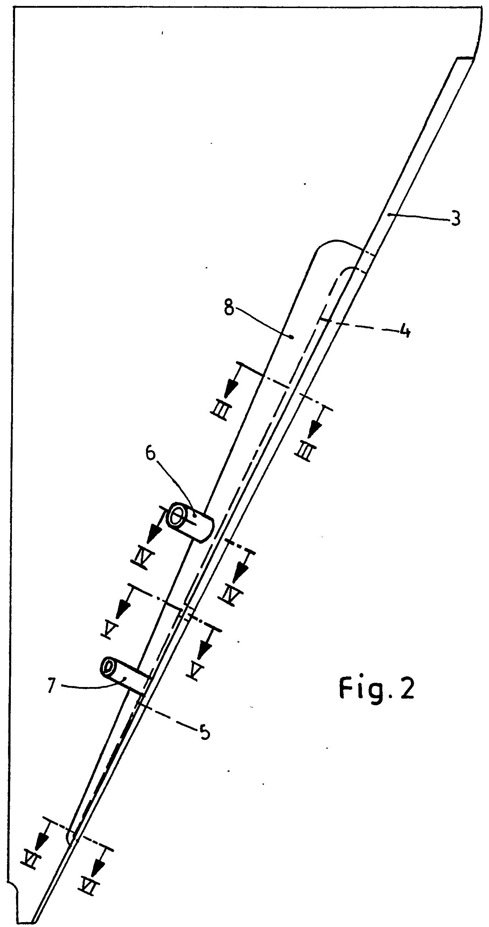

Fig. 2 das fertige Trichterblech in einer der Fig. 1 entsprechenden Darstellung sowie die

Fig. 3 bis 6 Schnitte entlang der Linien III-III bis VI-VI in Fig. 2.

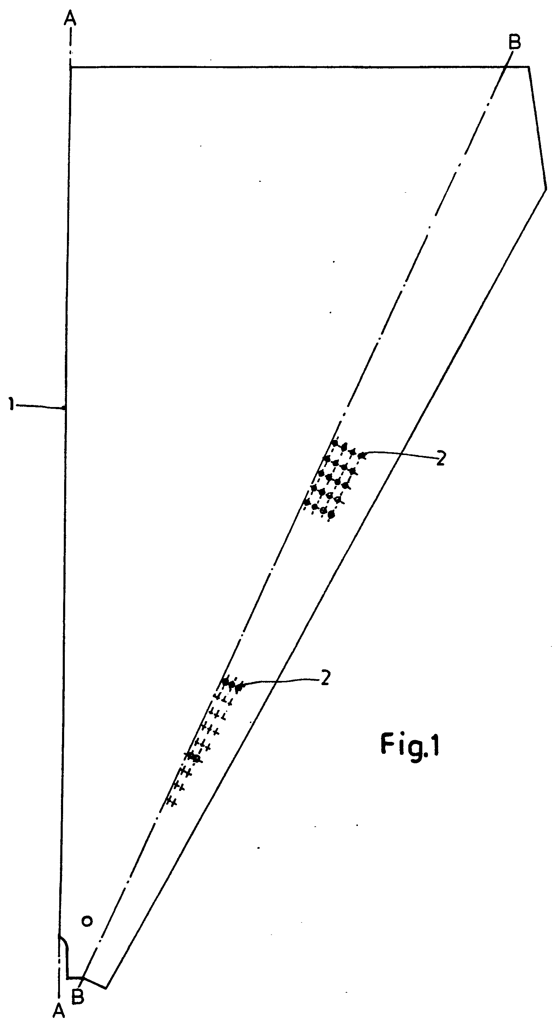

Wie Fig. 1 erkennen lässt, wird das Trichterblech 1 aus einem ebenen Blech ausgeschnitten. Dabei finden zur Herstellung eines Falztrichters zwei Trichterbleche Verwendung, die zur Linie A-A symmetrisch ausgebildet sind. Nach dem Ausschneiden werden Austrittsöffnungen 2 durch Stanzen oder Bohren in das Trichterblech 1 eingebracht. Sofern die Austrittsöffnungen 2 ausgestanzt werden, besteht die Möglichkeit, auch quadratische, rechteckige oder schlitzförmige Öffnungen vorzusehen. Ausserdem kann durch Anfasen der Öffnungen innen und aussen das Austrittsgeräusch der Luft vermindert werden.

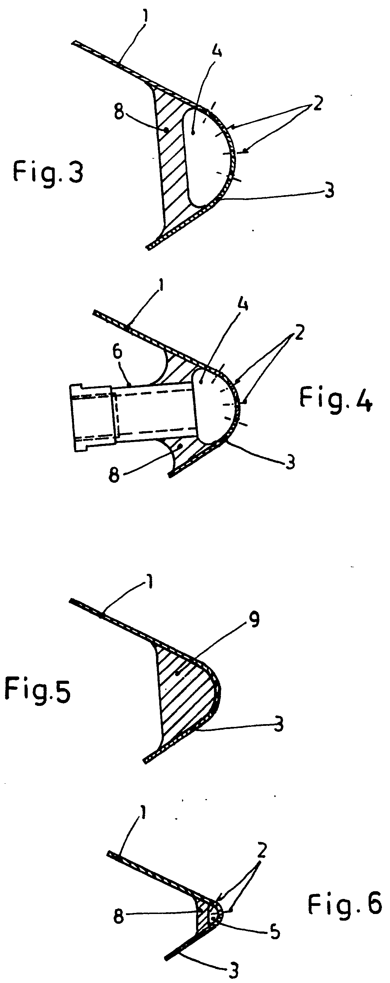

In einem nächsten Bearbeitungsschritt wird in einer Presse die eine Längskante entlang der Biegelinien B-B zur Erzeugung einer konisch zulaufenden Randkontur 3 abgebogen. Der Verlauf der Randkontur 3 ergibt sich aus den Figuren 3 bis 6.

In den Innenraum der Randkonturen 3 werden nunmehr Kerne eingelegt, deren Querschnittsfläche dem jeweils gewünschten Querschnitt der Druckluftzuführungskammern 4 und 5 entspricht. Dabei wird für jede abgeschlossene Druckluftzuführungskammer ein Kern verwendet. Zwischen den Kernen verbleibt ein schmaler Hohlraum. Die Kerne bestehen aus einem mittels eines Lösungsmittels auflösbaren Werkstoff. Zweckmässig sind die Kerne aus Styropor® hergestellt. Jeder Kern trägt weiterhin einen Druckluftzuführungsstutzen 6 bzw. 7.

In einem weiteren Arbeitsgang werden die Kerne mit einem aushärtbaren Kunststoff hintergossen, so dass sich in Abstand von der Spitze der Randkontur 3 eine Wandung 8 aus Kunststoff ergibt, die die Druckluftzuführungsstutzen 6, 7 trägt. Dabei dringt in den Hohlraum zwischen zwei Kernen ebenfalls Kunststoff ein, der, wie Fig. 5 zeigt, eine Trennwand 9 bildet. Als aushärtbarer Kunststoff wird zweckmässig ein Epoxydharz, ein Silixonharz oder ein Polyurethanharz verwendet.

Nach dem Aushärten des Kunststoffs wird durch die Druckluftzuführungsstutzen 6, 7 ein Lösungsmittel für die Kerne eingeführt. Als Lösungsmittel wird zweckmässig Trichloräthylen oder Tetrachloräthylen verwendet, da diese Mittel zwar den Kernwerkstoff auflösen, jedoch den ausgehärteten Kunststoff der Wandung 8 nicht angreifen. Nach Auflösung der Kerne wird deren Werkstoff in flüssiger Form durch die Druckluftzuführungsstutzen 6, 7 abgeführt.

Durch das Hintergiessen verlorener, in die Randkonturen 3 eingelegter Kerne mit Kunststoff besteht die Möglichkeit, entsprechend den jeweiligen Anforderungen in einfacher Weise mehrere Druckluftzuführungskammern entlang des Randes des Trichterbleches 1 vorzusehen. Dabei kann ohne zusätzlichen Fertigungsaufwand die Querschnittsfläche dieser Kammern kontinuierlich geändert werden. Durch die vorgesehene Zahl und Querschnittsflächengestaltung der Druckluftzuführungskammern in Verbindung mit der Lage, Grösse und Form der Austrittsöffnungen kann eine optimale Luftdosierung erreicht werden. Ausserdem besteht die Möglichkeit, die einzelnen Kammern mit Luft unterschiedlichen Drucks zu beaufschlagen. Die Trennwände zwischen den Druckluftzuführungskammern 4, 5 fallen ebenfalls ohne zusätzliche Fertigungsschritte an. Durch das Hintergiessen mit aushärtbarem Kunststoff entfällt auch die Gefahr einer Verformung des Trichterbleches, die beispielsweise auftreten kann, wenn ein konisch zulaufendes Rohr an ein Trichterblech angeschweisst wird.

Wie die Beschreibung zeigt, ist die Erfindung nicht auf das dargestellte Ausführungsbeispiel beschränkt.

**Patentansprüche**

1. Verfahren zum Herstellen eines Trichterbleches für einen Falztrichter einer Rotationsdruckmaschine, dessen Längskanten Druckluftzuführungskammern mit Austrittsöffnungen aufweisen, dadurch gekennzeichnet, dass

das zugeschnittene, ebene Trichterblech mit den Austrittsöffnungen versehen,

das Trichterblech entlang einer Längskante zur Erzielung einer sich zur Trichterspitze hin konisch verjüngenden Randkontur gebogen,

mindestens ein der konischen Randkontur des Trichterbleches entsprechender Kern aus einem mittels eines Lösungsmittels auflösbaren Werkstoff hergestellt wird,

wobei für jede abgeteilte Druckluftzuführungskammer ein eigener Kern hergestellt wird, der einen Druckluftzuführungsstutzen trägt,

der oder die Kerne, gegebenenfalls unter Freilassen jeweils eines schmalen Hohlraumes zwischen zwei Kernen, innen in die konische Randkontur des Trichterbleches eingelegt,

die Kerne mit einem aushärtenden, gegen das Lösungsmittel beständigen Kunststoff, gegebenenfalls unter Ausfüllung der Trennwände bildenden Hohlräume, hintergossen und nach Aushärtung des Kunststoffes die Kerne durch das Lösungsmittel aufgelöst und in flüssiger Form entfernt werden.

2. Verfahren nach Anspruch 1, dadurch gekennzeichnet, dass als aushärtender Kunststoff ein Epoxydharz, Polyurethanharz oder ein Silikonharz verwendet wird.

3. Verfahren nach Anspruch 1, dadurch gekennzeichnet, dass als Kernwerkstoff Styropor® verwendet wird.

4. Verfahren nach Anspruch 1, dadurch gekennzeichnet, dass als Lösungsmittel Trichloräthylen oder Tetrachloräthylen verwendet wird.

5. Trichterblech für einen Falztrichter, dessen Längskanten Druckluftzuführungskammern mit Austrittsöffnungen aufweisen, dadurch gekennzeichnet, dass es einstückig mit einer sich zur Trichterspitze hin konisch verjüngenden, im Querschnitt annähernd halbkreisförmig gebogenen Randkontur (3) hergestellt ist, die nach innen offene Randkontur (3) mittels einer Wandung (8) aus Kunststoff unter Belassung mindestens einer Druckluftzuführungskammer (4, 5) geschlossen ist und die Wandung (8) mindestens einen Druckluftzuführungsstutzen (6, 7) trägt.

6. Trichterblech nach Anspruch 5, dadurch gekennzeichnet, dass die Wandung (8) aus Kunststoff mindestens eine sich bis zur Innenseite der Randkontur des Trichterbleches erstreckende Trennwand (9) zur Abteilung zweier Druckluftzuführungskammern (4, 5) aufweist.

## Claims

1. Method of manufacturing a triangular blank for a folding triangle of a rotary printing press, the longitudinal edges of which have compressed air supply chambers with outlet apertures, characterised in that the flat triangular blank that is cut to size is provided with the outlet apertures,

the triangular blank is curved along one longitudinal edge to obtain a peripheral outline that tapers conically towards the tip of the triangle,

at least one core corresponding to the conical peripheral outline of the triangular blank is produced from a material that can be dissolved by means of a solvent, whereby for each divided compressed air supply chamber a special core is produced which carries a compressed air supply connection, the one, or more than one, core is inserted into the conical peripheral outline of the triangular blank, if need be releasing respectively a narrow cavity between two cores,

the cores are backed up with a hardening solvent-resistant plastics material, if need be filling the cavities forming dividing walls, and after hardening of the plastics material the cores are dissolved by the solvent and are removed in liquid form.

2. Method according to claim 1, characterised in that an epoxide resin, polyurethane resin or a silicon resin is used as the hardening plastics material.

3. Method according to claim 1, characterised in that Styropor® is used as the core material.

4. Method according to claim 1, characterised in that trichloro-ethylene or tetrachloro-ethylene is used as the solvent.

5. Triangular blank for a folding triangle, the longitudinal edges of which have compressed air supply chambers with outlet apertures, characterised in that it is produced in one piece with a peripheral outline (3) that tapers conically towards the tip of the triangle and in cross-section is curved approximately as a semicircle, the peripheral outline (3) open to the inside is closed by means of a wall (8) of plastics material leaving at least one compressed air supply chamber (4, 5) and the wall (8) carries at least one compressed air supply connection (6, 7).

6. Triangular blank according to claim 5, characterised in that the wall (8) of plastics material has at least one dividing wall (9) extending up to the inner side of the peripheral outline of the triangular blank to divide two compressed air supply chambers (4, 5).

## Revendications

1. Procédé de fabrication d'un triangle de tôle pour un triangle plieur d'une machine d'impression rotative, les bords longitudinaux du triangle de tôle comportant des chambres d'alimentation en air comprimé ayant des ouvertures de sortie, caractérisé en ce que le triangle de tôle découpé et plan est muni des ouvertures de sortie; que le triangle de tôle est plié le long d'un bord longitudinal pour former un contour latéral se rétrécissant d'une manière conique vers la pointe du triangle; qu'au moins un noyau correspondant au contour latéral conique est fabriqué en une matière pouvant être dissoute au moyen d'un solvant, un noyau étant fabriqué pour chaque chambre séparée d'alimentation en air comprimé et portant une tubulure d'alimentation en air comprimé; que le ou les noyaux sont introduits intérieurement dans le contour latéral conique du triangle de tôle, un espace creux étroit étant éventuellement laissé entre chaque groupe de deux noyaux; qu'une matière plastique durcissable et résistant au solvant est coulée derrière les noyaux, en remplissant éventuellement les espaces creux formant des parois séparatrices et qu'après le durcissement de la matière plastique, les noyaux sont dissous par le solvant et évacués sous forme liquide.

2. Procédé suivant la revendication 1, caractérisé en ce que, comme matière plastique durcissable, on utilise une résine époxyde, une résine polyuréthane ou une résine silicone.

3. Procédé suivant la revendication 1, caractérisé en ce que, comme matière plastique pour les noyaux, on utilise du Styropor®.

4. Procédé suivant la revendication 1, caractérisé en ce que, comme solvant, un utilise du trichloréthylène ou du tétrachloréthylène.

5. Triangle de tôle pour un triangle plieur, dont les bords longitudinaux comportent des chambres d'alimentation en air comprimé ayant des ouvertures de sortie, caractérisé en ce qu'il est fabriqué d'une pièce et comporte un contour latéral (3) se rétrécissant d'une manière conique vers la pointe du triangle et dont la section est approximativement pliée en demi-cercle, le contour latéral (3) ouvert vers l'intérieur étant fermé au moyen d'une paroi (8) en matière plastique, cependant qu'il substiste au moins une chambre d'alimentation en air comprimé (4, 5) et que la paroi (8) porte au moins une tubulure d'alimentation en air comprimé (6, 7).

6. Triangle de tôle suivant la revendication 5, caractérisé en ce que la paroi (8) en matière plastique comporte au moins une paroi de séparation (9) qui s'étend jusqu'au côté intérieur du contour latéral du triangle de tôle et qui est destinée à séparer deux chambres d'alimentation en air comprimé (4, 5).

Fig.1

Fig. 2

Fig. 3

Fig. 4

Fig. 5

Fig. 6